# EUROPEAN PATENT SPECIFICATION

(11) **EP 3 513 106 B1**
(45) Date of publication and mention of the grant of the patent: **24.03.2021**
(21) Application number: 17765193.2
(22) Date of filing: 17.09.2017
(51) Int. Cl.: F16L 1/19, F16L 1/20, F16L 1/23, B66D 1/00

(54) **SYSTEM, APPARATUS AND METHOD**
SYSTEM, VORRICHTUNG UND VERFAHREN
SYSTÈME, APPAREIL ET PROCÉDÉ

(30) Priority: 16.09.2016 NL 2017484
(43) Date of publication of application: 24.07.2019
(73) Proprietor: Royal IHC Limited, Stocksfield, Northumberland NE43 7TN (GB)
(72) Inventor: SMITH, Michael James, Stocksfield Northumberland NE43 7TN (GB); MANCHESTER, Ralph, Stocksfield Northumberland NE43 7TN (GB)
(74) Representative: HGF
(86) International application number: PCT/EP2017/073378
(87) International publication number: WO 2018/050877

(56) References cited:
- WO-A1-2005/085692
- WO-A1-2007/091884
- WO-A1-2009/022189
- US-A- 3 860 122
- US-A1- 2010 119 307
- US-A1- 2011 286 801
- US-A1- 2012 195 716

## Description

The present invention relates to a system, apparatus and method. In particular, but not exclusively, the present invention relates to a system and method for laying pipelines from a marine vessel to a subsea location.

Traditionally, pipelines may be deployed from a vessel and onto the sea bed as a continuous pipe length using various techniques. In "J-lay" systems, pipe sections are sequentially added and secured to the pipeline being deployed in an assembly-line type of method.

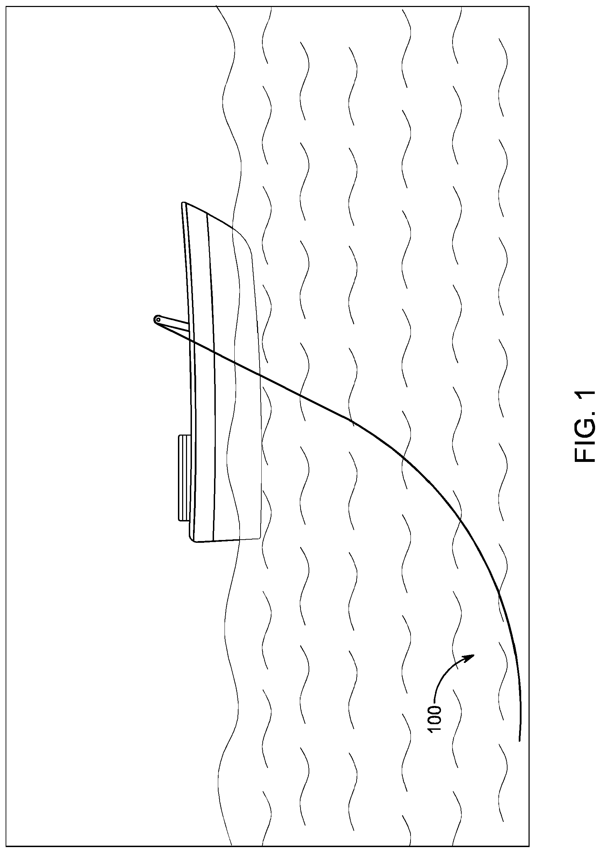

On a marine vessel, a pipe section is raised from a horizontal position on the deck, to a more vertical position, to be held by a tower. The pipe section is then lowered down the tower until the lower end of the pipe section is in close proximity to an upper end of a previously deployed pipe section (field joint). The lower end of the pipe section is then coupled to the upper end of the previously deployed pipe section by a suitable method of attachment, for example by welding. For effective coupling, both sections are typically held or clamped into position during attachment. Following attachment, the pipe section is lowered from the marine vessel, e.g. via a moon pool or edge of vessel, and the process is repeated. As the pipeline is built up, it is lowered along the "lay-line", i.e. the position the pipeline follows as it is lowered from the tower to the subsea position. As shown in Fig. 1, the lay-line follows the shape of a letter "J" 100.

The welded pipe is thus gradually built, and lowered into the sea water, and will lay on the seabed or in a trench in a predetermined location. The pipe may be used for transporting production fluids such as oil, gas and water along the seabed, for example from a production platform to an on-shore location.

The J-lay technique can be used to lay pipeline at shallow or deep water depths, of typically around 750m to 1000m. Typically the pipe diameter may range from 5 to 36 inch (12.7 to 91.44 cm). The pipe section typically may be 12m in length, though the pipe sections may be pre-welded in sets of 2 x 12m lengths (so called double pipe joints, of 24m), or 3 x 12m lengths (so called triple joints, of 36m), or 4 x 12m lengths (so called quad pipe joints, of 48m), or 6 x 12 m lengths (so called hex pipe joints, of 72 m), etc.

To accommodate changes in water depth, the tower may be pivotable to different angles, from around 90 degrees (vertical to the deck) for deeper water to around 45 degrees for shallower water.

WO 2008/120977 discloses a pipeline laying vessel. A pipe section is loaded into a loading arm. An upender is used to raise the pipe section to the tower angle by rotating (pivoting) the pipe section.

Some J-lay systems, such as that described in WO2008/120977, employ a loading arm to hold a pipe section in a position on deck, and move the pipe section to a more vertical position to be presented to the tower.

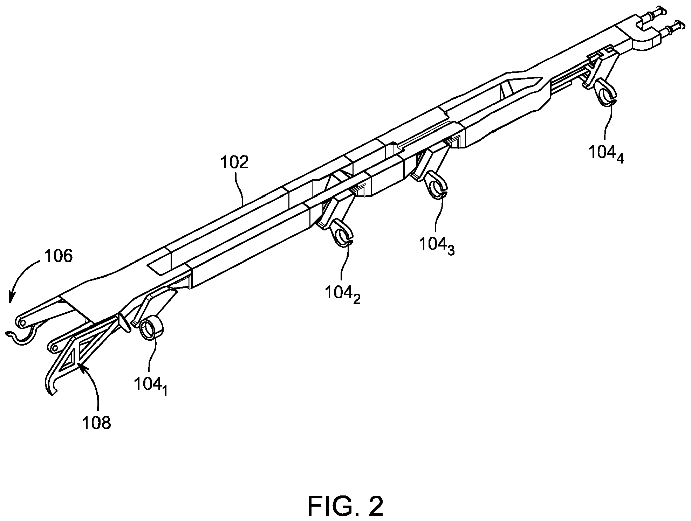

As shown in Fig. 2, the loading arm typically includes a steel body 102 that forms a container for holding a pipe section, and a series of clamps 104₁₋₄, which hold the pipe section in place within the loading arm. A first clamp, situated at an end of the loading arm may support radial and axial loads. The remaining three clamps support radial loads only. The clamps actuate to collect and secure the pipe. A main pivot 106 acts as a pivot point for the loading arm to move upwards towards a J-lay tower. A safety shoe 108 may be used as a backstop pipe holder in case the pipe section were to fall from the loading arm when in an upright position.

WO 2005/085692 discloses a marine pipelay system of the "J-lay" type. The system includes a vessel comprising a substantially vertical frame attached to a vessel support structure, an upper clamping element vertically displaceable along the frame via a displacement member, a lower clamping element, aligned with the upper clamping element, a loading device for supplying a pipe segment to the upper clamping element, control means adapted to control the displacement member and the upper and lower clamping elements for lowering the pipe segment by the displacement member along a pipe trajectory, the upper clamping element being engaged on the pipe segment, while the lower clamping element is disengaged, whereby the lower clamping element being situated on the vessel support structure, a transverse track extending from a side position on the vessel to a position alongside the pipe trajectory, and a support member which is displaceable along the tract to be situated in the pipe trajectory.

WO 2009/022189 discloses a method and apparatus for laying offshore pipeline from a reel lay vessel, including; providing a pipeline laying tower with a travelling clamp, which can be used to suspend the pipeline from the vessel, and a tensioner apparatus on the same tower, for providing a clamping force which can be used to suspend the pipeline from the vessel.

US 3860122 A discloses an apparatus for transferring a tubular member such as a pipe from a storage area such as an oil well drilling platform or barge to a submerged position at least partly underwater for the purpose of driving pile, laying pipe or other related uses. US 2011/286801 A1 discloses a pipeline layering vessel including a J-lay system which defines a firing line.

US 2010/0119307 A1 discloses a system usable with a pipe laying vessel, including a support frame, such as a deck frame of the vessel and a loader arm which is movable between a loading position and an upright position. WO 2007/091884 A1 discloses a method for laying a pipeline using a vessel comprising a crane.

US 2012/195716 A1 discloses a tubular handling system.

Some J-lay systems, such as those described in WO 2005/085692 and WO 2009/022189, employ static clamps and mobile clamps for deploying and lowering pipe sections into a J-lay configuration.

A problem with some known pipe laying systems is that the J-lay tower can create stability issues for the vessel, particularly during rough weather.

With some known systems the self-weight of the J-lay tower coupled with the vessel acceleration causes fatigue resulting in further mass increases.

Typically, welding and coating operations between a pipe section and a field joint in a J-lay operation are undertaken on a workstation. The workstation is located within the tower. The workstation is a closed habitat with a slot for the pipe section. The workstation may be retracted out of the way of the travelling clamp as it traverses the pipe section. Alternatively, the workstation is a closed habitat with a large openable roof to allow the travelling clamp to lower into it.

Typically, some J-lay systems use a double-drum hoist winch to power a multi-fall rope system for the raising and lowering of a travelling clamp. Typically, the ends of the ropes from the double-drum hoist winch are joined together in a middle point of the system. This makes rope redundancy not practicable. In addition, increasing productivity of the system, in terms of increased load capacity, is done by re-reeving the system to increase or decrease the number of falls. More falls are added to increase load but reduce speed. Reducing falls reduces the load capacity but makes the system faster. It is not practical to change falls mid travel thus if you have increased the falls to lower a large load you also have to travel slowly on the return empty stoke. This reconfiguring takes time and can impact the speed of the system.

Also, some J-lay systems typically use a double-drum hoist winch to power a multi-fall rope system for the raising and lowering of a loading arm. The ropes for each drum are subject to large snatch loads in the event of breakage of the other rope.

The present invention is defined in the independent claims 1 and 8 for building an deploying an elongate element in a J-lay operation.

Certain embodiments of the invention provide the advantage that the height and mass of the tower is reduced for an equivalent sized vessel compared to known systems.

Certain embodiments provide a system in which a pipe section may be presented to a tower, and then moved through a series of strokes to lower the pipe section to a desired portion.

Certain embodiments provide the advantage that it is easier to lower the tower to deck when not in use.

Certain embodiments provide the advantage that operations can be undertaken in an enclosed environment.

Certain embodiments provide the advantage that moveable components may be moved more efficiently in comparison to known systems.

Embodiments of the invention are further described hereinafter with reference to the accompanying drawings, in which:
Fig. 1 illustrates a vessel with a "J-lay" assembly;
Fig. 2 illustrates a loading arm for holding and moving a pipe section;
Fig. 3 illustrates a system for raising a loading arm and an elongate member, in a step by step procedure;
Fig. 4 illustrates another view of a loading arm;
Figs. 5a-d illustrate a system for lowering an elongate element, in a step by step procedure;
Figs. 6a-d illustrate a system for sealing a portion of a pipe section within J-lay tower;
Figs. 7a-b illustrate a system using a multi-rope system to traverse a travelling clamp;
Figs. 8a-b illustrate a system using a multi-rope system for raising a loading arm;
Fig. 9 illustrates a multi-rope system;
Fig. 10 illustrates another multi-rope system; and
Fig. 11 illustrates a hydraulic load balance system.

In the drawings like reference numerals refer to like parts.

### Embodiment 1

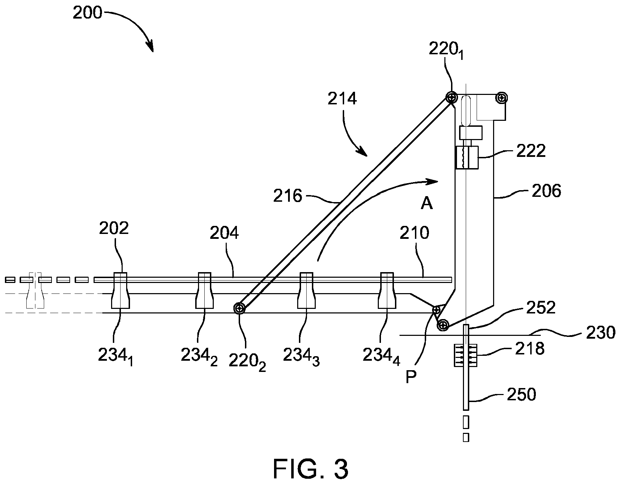

Figs. 3-5 illustrate a first embodiment of a system 200 for building and deploying an elongate element in a J-lay operation. The system includes an upright structure, a segment of the elongate element adjacent to the upright structure and a moveable clamping element for clamping the segment and lowering the segment. The upright structure is shorter in length than the segment.

Specifically, Fig. 3 shows the initial position when moving an elongate member 204 (e.g. a pipe section for use in a J-lay operation) from a first generally horizontal position (as shown in Fig. 3) towards a second position adjacent an upright structure 206 (e.g. a J-lay tower). The system may be used, for example, during a J-lay procedure, in raising a pipe section from a generally horizontal position on the deck of a vessel to a more vertical position, against a J-lay tower. From there, the pipe section may go on to the stages of welding/attaching to a further, previously deployed, elongate element and then deployment into the sea, as is known in the art.

As used herein, the terms "generally horizontal position", "substantially horizontal", and the like, are used broadly to cover a position that may be parallel to the ground or to the deck of a vessel (which may itself frequently move from absolute horizontal), or offset somewhat from that horizontal. I.e., more horizontal than vertical to the underlying floor.

As used herein, the terms "generally vertical position", "substantially vertical", and the like, are used broadly to cover a position that may be perpendicular to the ground or to the deck of a vessel (which may itself frequently move from absolute horizontal), or offset somewhat from that vertical. I.e., more vertical than horizontal to the underlying floor.

As used herein, the term "upright structure" is used to cover any erection or assembly that extends from a ground, floor or deck and may extend at any angle, and may change angle. For example, a J-lay tower extends upwards typically between 45 degrees and 90 degrees from a deck of a vessel. However, the structure may be approximately upright or extending outwards/upwards any amount or angle from a base, ground or deck.

As used herein, the term "end region" is used to cover any point or region of a structure that is not a central point. For example, if the structure is an elongate element, the end region may be a point or region at an end, near an end, or not in the centre to the elongate element.

Thus, the first position may be a generally horizontal position, for example prior to deployment when a pipe section is laying on the deck or a platform, and the second position may be more vertical than the first position, for example when being moved towards a J-lay tower for subsequent attachment to further pipeline and deployment into the sea.

In this embodiment the system includes a holding element, in this case a loading arm 202, for holding a segment of the pipe section 204 in the first position, as shown in Fig. 3. Loading arms *per se* are generally known. An example is shown in Fig. 2.

The system also includes a loading arm hoist system 214 operably engaged with the tower 206 and the loading arm 202, at pulleys 220₁ and 220₂ respectively, for drawing the loading arm towards the tower, until the loading arm is holding the segment of the pipe section adjacent the tower. In this case the loading arm hoist system 214 includes a rope 216, and is connected with a hoist winch (not shown). The rope 216 is fed from the hoist winch, around the loading arm 202 and back to the winch.

Any suitable winch may be used, for example a double-drum hoist winch. The winch may be mounted at any suitable position on the vessel, e.g. the winch may be deck mounted.

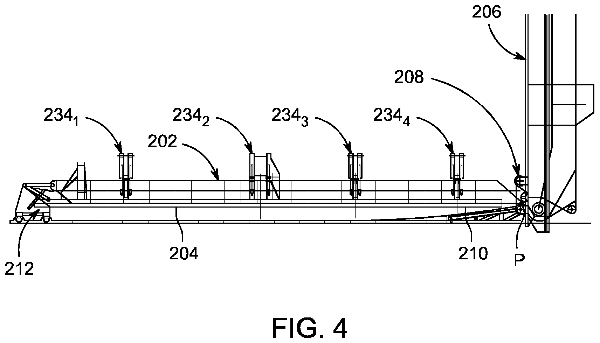

Fig. 4 shows another view of the loading arm 202 of Fig. 3, in more detail. The pipe section 204 being held by the loading arm is shown in Fig. 4. Fig. 4 also shows clamps 234₁₋₄ for holding the pipe section in the loading arm. The clamps 234₁₋₄ typically have a 30 to 40 tonne capacity to withhold radial and/or axial loads.

In use, the hoist winch is wound to apply a force to the hoist rope 216. As the rope is wound around the winch the length of the remaining rope is reduced. The loading arm is pivotally connected to the J-lay tower at point P, such that the overall result of the winching of the rope around the pulleys is that the loading arm is pulled upwards and towards the J-lay tower, pivoting at point P. The arrow A in Fig. 3 illustrates the movement of the loading arm 202 as a result of the hoist winch being in operation to raise the loading arm to the J-lay tower.

The J-lay tower is shorter in length than the loading arm. In this embodiment, the J-lay tower is substantially half the length of the loading arm. The J-lay tower may range from substantially 25% to 75% of the loading arm.

Once the loading arm is positioned against the tower it is supported by the tower. For example the loading arm may be supported by means of at least one docking wedge, or two docking wedges, and a transverse guide. The transverse guide (not shown) ensures the loading arm aligns correctly with the J-lay tower.

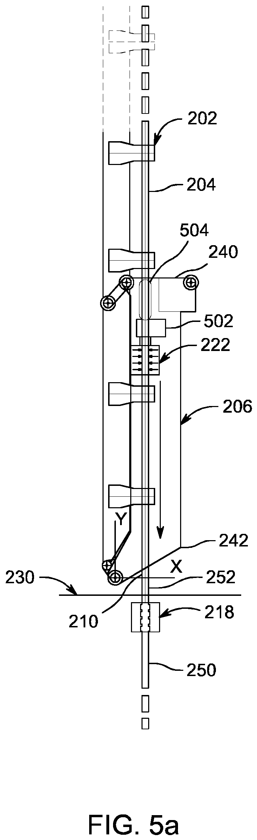

Once the pipe section is supported against the tower, the loading arm clamps 234₁₋₄ move the pipe section 204 into the main pipe delivery line (the "firing line") of the J-lay tower 206. The firing/delivery line is the position from which the pipe section can be lowered to meet the previously deployed pipeline. The pipe section is then aligned with the previously deployed pipe section 250 and lowered until the lower end 210 of the pipe section 204 meets an upper end 252 of the previously deployed pipe joint 250 (as shown in Fig. 5a). Alignment is achieved by the clamps affecting the vertical position, fore-aft position (by bending) and/or by rotation.

Precise alignment is further achieved using an internal line-up clamp (not shown). In this embodiment an internal line-up clamp is mounted at any upper end of the loading arm 202 and is fed into an upper end 212 of the pipe section 204 by an umbilical cord (not shown). The internal line-up clamp is subsequently lowered to ensure the pipe section 204 is in-line with the previously deployed pipe joint 250.

Mounting the internal line-up clamp on the loading arm 202 allows the internal line-up clamp to return to the vessel deck with the loading arm. This may allow maintenance to take place on the internal line-up clamp. The process of lowering the internal line-up clamp may begin as the loading arm 202 is being hoisted, so that the internal line-up clamp is in position at the weld point as soon as the Loading arm is up.

The lower end 210 of the pipe section 204 is coupled to the upper end 252 of the previously deployed pipe joint 250 by welding. The previously deployed pipe section is held in position by a further clamp 218. In this example the clamp 218 is a hang off clamp 218 located beneath a lower end 242 of the J-lay tower. The hang off clamp is attached to the vessel. Alternatively the hang off clamp may be attached to the tower 206.

Once the lower end 210 of the pipe section 204 is coupled to the previously deployed pipe joint 250, the pipe section is ready to be lowered to a deployed position. The pipe section 204 is passed from the loading arm clamps 234₁₋₄ to a travelling assembly within the J-lay tower. In this embodiment, the travelling assembly includes a moveable clamping element 222, which is moveable along the J-lay tower. That is, the moveable clamping element 222 is moveable along the J-lay tower.

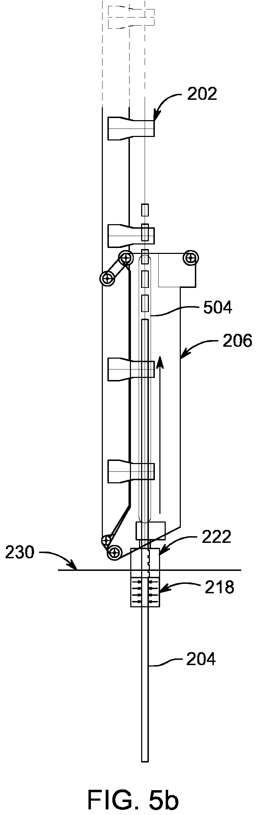

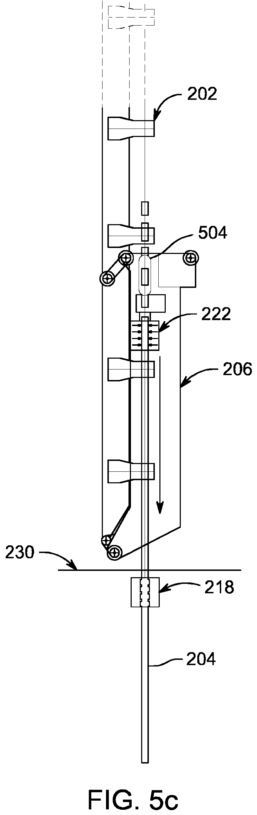

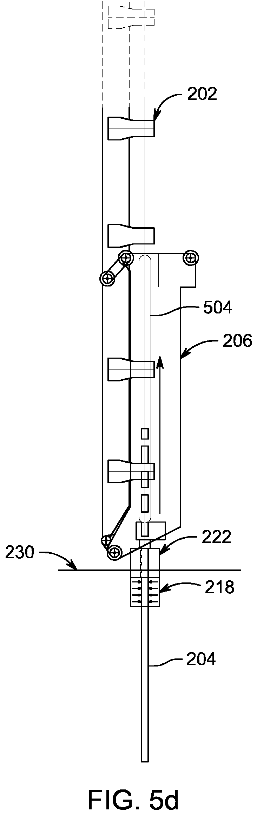

The travelling assembly 222 on the tower cooperates with the hang off clamp 218 located beneath an end of the J-lay tower to lower the pipe section 204 into the sea (to deploy the pipe section) following the firing-line/lay-line, such that the upper end 212 of the pipe section 204 becomes the next field joint. Typically, the moveable clamping element and the hang off clamp have a capacity of 600 to 2000 tonnes, which is sufficient to support the weight of the deployed pipe following attachment of the pipe section to the deployed pipe. Fig. 5 illustrates schematically how the moveable clamping element 222 and hang off clamp 218 cooperate to lower the pipe section 204.

The moveable clamping element 222 is located initially towards an upper end 240 of the J-lay tower 206. The moveable clamping element 222 actuates to clamp a segment of the pipe section. The hang off clamp 218 releases the field joint 250, such that the weight of the entire pipe (now including the pipe section) is supported by the moveable clamping element 222.

The moveable clamping element 222 is traversed down the J-lay tower, lowering the pipe section, as indicated by the arrow in Fig. 5a.

The loading arm clamps 234₁₋₄ guide the pipe section as it passes through a moon pool (not shown) in the deck 230 of the vessel.

The moveable clamping element is traversed using a further hoist system 502 operably engaged with the J-lay tower and the moveable clamping element. In this case the further hoist system includes multi-fall rope system. The multi-fall rope system includes a rope 504 and a plurality of pulleys (not shown) and is connected with a hoist winch (not shown). Any suitable winch may be used, for example a double-drum hoist winch. The winch may be mounted at any suitable position on the vessel, e.g. the winch may be deck mounted, or otherwise.

Both the moveable clamp and the hang off clamp are controlled from a pipe-lay control room that may be situated in a container on the deck of the vessel (not shown). The moveable clamp and the hang off clamp are controlled from the pipe-lay control room using a coordinated control system (Scada for example). The coordinated control system, typically includes hydraulic actuators and electronic sensor feedback. The moveable clamp and hang off clamp may also be controlled separately, including locally or semi-locally, for example when maintenance is required.

The winch of the further hoist system 502 allows the rope 504 to extend such that the moveable clamping element traverses down the J-lay tower. That is, the moveable clamping element 222 is moveable through its stroke length.

In this embodiment the stroke length is substantially equal to the length of the J-lay tower. In this embodiment the stroke length is less than the length of the pipe section 204. Specifically, the stroke length is substantially 50% of the length of the pipe section 204.

In this embodiment, the length of the upright structure is substantially 50% the length of the segment.

The stroke length of the moveable clamping element 222 brings the moveable clamping element from its initial point towards the upper end 240 of the J-lay tower 206, to its lowermost point. That is, the lowermost point of the moveable clamping element 222 is towards the lower end 242 of the J-lay tower.

Once the moveable clamping element 222 has traversed the desired stroke length, the hang off clamp 218 actuates and clamps a segment of the pipe section 204. The moveable clamping element releases the pipe section such that the hang off clamp supports the weight of the entire pipe. The moveable clamping element then traverses back up the J-lay tower 206 as indicated by the arrow in Fig. 5b.

When the moveable clamping element 222 reaches the top of its stroke length, it actuates and clamps a further segment of the pipe section 204. The hang off clamp 218 releases the pipe section.

This process is repeated (as shown in Figs. 5c-d) whereby the moveable clamping element 222 lowers the further segment, the hang off clamp clamps a further segment of the pipe section and the moveable clamping element returns up the tower.

Each 'cycle' whereby the moveable clamping element 222 lowers a segment of the pipe section, the hang off clamp 218 clamps a segment of the pipe section 204 and the moveable clamping element releases the segment and returns to its uppermost position on the J-lay tower 206 is termed a pass.

That is the pipe section is deployed through a plurality of passes; wherein a pass includes the moveable clamping element clamping a segment of the elongate element and lowering the segment, a further clamp, located beneath an end of the upright structure, clamping a segment of the elongate element when the moveable clamping element reaches a specified point, the moveable clamp releasing the segment of the elongate element such that the elongate element is supported by the further clamp, and the moveable clamp returning to its initial position.

In this embodiment there are two passes, such that the deployment of a pipe section 204 requires the moveable clamping element 222 to lower two segments of the pipe section through its full stroke length, returning to its uppermost position on the J-lay tower 206. That is, in this embodiment two passes are required to lower the upper end 212 of the pipe section 204 until it becomes the new field joint 250 and is held by the hang off clamp 218. Once the pipe section 204 is lowered sufficiently such that support is no longer required from the loading arm 202 then the hoist winch of the loading arm hoist system is able to render to allow the loading arm to return to the horizontal to repeat the above process. The elongate element is built and deployed in a J-lay operation, including holding a segment of the elongate element adjacent to an upright structure, clamping the segment with a moveable clamping element, lowering the segment using the moveable clamping element. The upright structure is shorter in length than the holding element.

Various modifications to the detailed designs as described above are possible.

There may be provided a system comprising; a vessel for laying a pipeline in a J-lay operation, comprising:
a J-lay tower;
a loading arm for presenting pipe segments to the J-lay tower;
wherein the J-lay tower is shorter than the loading arm.

The J-lay tower may extend below the hang off clamp.

The loading arm 202 in the first embodiment is of substantially equal size to the pipe section 204. However the loading arm 202 may be of differing lengths relative to the pipe section, provided the loading arm can provide the required structural support to the pipe section. For example the loading arm 202 may be smaller in length than the pipe section 204.

It should be noted that although the J-lay tower 206 in Figs. 5a-d is vertical (i.e. at 90 degrees to the deck 230 of the vessel), it may be situated at any angle according to the required angle of deployment of the elongate element. The angle of the tower may also be changed during use to accommodate for the changing depth of water along the lay-line. Because the loading arm/elongate member is operably connected with the tower, hoisting of the elongate member towards the tower results in a predetermined accuracy above a set location being achieved.

Rather than a rope or ropes, the loading arm hoist system 214 for raising the loading arm adjacent the J-lay tower may utilize chains or cords, or the like. Similarly, the further hoist system 502 may utilize chains or cords, or the like.

In the above embodiment, the loading arm hoist system 214 is for drawing the holding element 202 towards the upright structure 206. Rather than the winch and pulley system described, the loading arm hoist system may include a pair of rack and pinion arrangements, whereby a force is applied to the pinions via a hydraulic system to drive the pinions along the racks. Similarly, the further hoist system 502 may include a pair of rack and pinion arrangements.

It will be appreciated that although the system has been described in relation to movement of a pipe section for a J-lay operation, the system may be more widely used for positioning other elongate elements.

Although the first embodiment teaches two passes of the moveable clamping element 222, i.e. with a stroke length of substantially 50% of the length of the loading arm, the required number of passes may be more or less. Specifically the required number of passes is that which ensures an upper end 212 of the pipe section 204 is lowered until it becomes the new field joint.

The required number of passes may change between deployment operations, depending on the pipe section being deployed (e.g. double, triple, hex etc.) relative to the stroke length. For example two passes may be required to deploy a quad pipe section, followed by a single pass for a double pipe section.

Although the first embodiment describes the stroke length being substantially equal to the length of the J-lay tower, the stroke length may be less than the length of the J-lay tower. For example, the stroke length may be between 25% and 100% of the length of the J-lay tower. Aptly, the stroke length may be around 75% of the length of the J-lay tower. Although the first embodiment describes only full passes, it is possible to deploy the elongate element through a non-integer number of passes, e.g. 1.5 passes. A non-integer number of passes occurs when the moveable clamping element does not return to its initial starting position before beginning another pass. This may be used to deploy triple joints, if the stroke length of the moveable clamping element is substantially equal to the length of a double joint, for example.

In the above described embodiment, the loading arm 202 is only released once the pipe section 204 is sufficiently lowered. However there may be a product guide (not shown) in the tower 206 to support the pipe section, which allows the loading arm to be released earlier. The loading arm may be lowered after the penultimate pass, for example.

The system may further include an abandonment and recovery system. This is used as a way to cease and restart the laying operation, and allows the pipeline to be lowered and recovered from the seabed using a wire-rope winch-base system. The abandonment and recovery system uses hydraulic cylinders to lower an abandonment and recovery frame into position that places a winching sheave in the firing line of the tower.

The system may further include a bulky item handler. This is mounted on a sliding base on the deck of the vessel independent of the tower, and is used for the movement and positioning of bulky items. It is also used to guide and support the bulky items on installation, and can be used in reverse to recover the items at any point during the installation process, for example a sub-sea manifold assembly.

The J-lay tower is pivotable to various positions, and can be moved to accommodate different water depths. That is, for shallower water, the tower is moved forward, away from the 90 degree position. This allows the lay-line of the pipe to keep the pipe within its elastic bending limits, to avoid damage to the pipeline.

With the above described arrangement, a system is provided in which pipe lengths of standard sizes are deployed in a J-lay operation, yet the J-lay tower may be much shorter than standard tower heights. This helps avoid instability of the vessel, particularly in bad weather.

A shortening of the J-lay tower would not have been possible with previous known arrangements because various equipment, e.g. the internal line up clamp and a structural top crossbeam, are positioned on the J-lay tower and would impede movement of a moveable clamp along the tower.

The structural top crossbeam is a load bearing crossbeam, which in previous known arrangements, spans directly across the top of the J-lay tower, between legs of the J-lay tower. With the above arrangement, the crossbeam is reconfigured into a curved configuration to allow movement of a moveable clamp along the full length of the J-lay tower. The curved configuration provides sufficient strength, e.g. because of the reduced loading bearing requirements of the crossbeam, resulting from a smaller J-lay tower compared to known designs. In addition, the curved configuration of the crossbeam allows the pipe section to extend out of the top of the J-lay tower.

With the above arrangement, the stroke length of the moveable clamping element is reduced from known systems by a factor substantially equal to the number of passes.

With the above arrangement, the longer the welding and coating times, the greater the advantage with the present system. This is because the extra passes of the moveable clamp adds a fixed duration per pass onto the cycle. For significant welding and coating times, the system can be optimised by reducing the number of welding/coating operations required (i.e. by using longer pipe sections) but increasing the number of passes.

With the above arrangement, due to the reduced height of the tower more parts of the system are easily accessible in comparison to known systems.

With the above arrangement, there is more opportunity to make the system operable with variable string capacities, i.e. double pipe, quad pipe, hex pipe, and the like.

With the above arrangement, the tower has a lower vertical centre of gravity.

Various specific advantages of the optional features described above will now be described. These are in addition to the various advantages already described above in relation to various parts of the system or the system as a whole. It will be appreciated that numerous advantages can be achieved with the system and method described; some of those are achieved by the overall system, some are achieved by a combination of features and some are achieved by a specific feature.

Aptly, the moveable clamping element is moveable along the upright structure. This allows for the moveable clamping element to be guided by the upright structure in a linear direction of movement.

Aptly, the system includes a further clamp located beneath an end of the upright structure for clamping the lowered portion of the elongate element. This allows the elongate element to be supported while the moveable clamping element is traversing the tower.

Aptly, the further clamp is a static clamp. This allows loads from the elongate element to be directly transferred to the tower or the vessel.

Aptly, moveable clamping element is moveable through a stroke length, and the stroke length is between 25% and 100% of the length of the upright structure. This allows the clamping element to utilise up to all of the travelling distance along the upright structure to have a maximum length of movement possible (and thus minimum of repeat movements for a pipe segment). Or, the clamping element may use most of the travelling distance available. Or, the clamping element may use a predetermined travelling distance to suit the particular nature of the situation.

Aptly, the holding element includes an internal line up clamp. This allows precise alignment of pipe segment with field joint, while allowing the moveable clamping element to travel along the tower unimpeded.

Aptly, the moveable clamping element is moveable via a multi-fall rope system. This allows the moveable clamping element to be smoothly traversed along the J-lay tower.

Aptly, the length of the upright structure is substantially half the length of the segment. This allows the mass of the J-lay tower to be significantly reduced in comparison to known systems for equivalents lengths of elongate segments, while the action of lowering a pipe segment downwards after welding is achieved relatively quickly and easily.

Aptly, the elongate element is deployed through a plurality of passes. This allows the height of the J-lay tower to be substantially reduced from known systems by a factor substantially equal to the number of passes of the moveable clamping element.

Aptly, the further clamp clamps the segment of the elongate element when the moveable clamping element reaches its lowermost point. This allows the elongate element to be deployed in as few passes as possible with the system.

Aptly, the elongate element is deployed through two passes. This allows the height of the tower to be substantially half of the segment.

Aptly, a vessel includes a tower as the upright structure, and the system including elements described above. Thus, a vessel can be used for lifting one or more pipe section to an appropriate position in a J-lay operation. A vessel including the tower and the system described above will avoid or reduce stability issues for the vessel when in operation. Aptly, the method of building and deploying an elongate element includes moving an elongate member from a first position towards a second position adjacent an upright structure on the deck of a vessel. This allows an elongate member to be deployed in a J-lay operation.

Aptly, the method further includes the steps of placing the elongate member in a holding element before moving the elongate member from a first position towards a second position adjacent an upright structure on the deck of a vessel. In this way, movement of the elongate element may be via a holding element to hold and guide the member. Forces are applied to the holding element to thereby position the elongate element.

### Embodiment 2

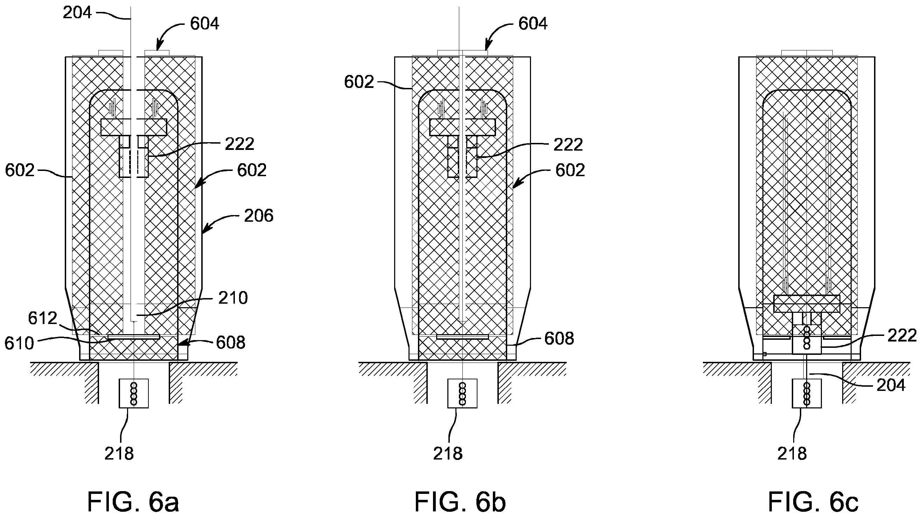

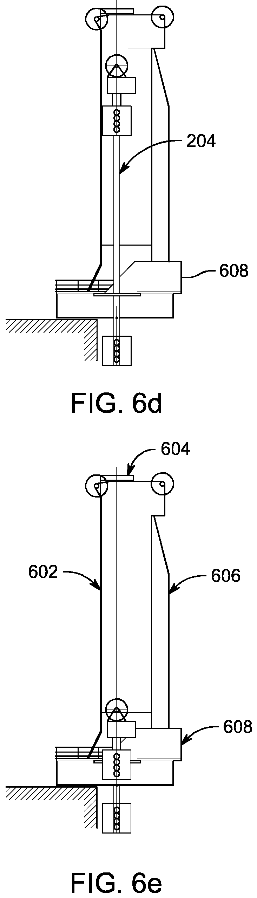

Fig. 6 illustrates a second embodiment, including a workstation for connecting an elongate element to a field joint. The workstation is substantially enclosed within the upright structure. As such, the elongate element or portion of the pipe section 204 situated within the J-lay tower 206 is sealed from the outside environment.

As used herein, the terms 'substantially enclosed', 'substantially sealed' are defined as enclosed enough for the purpose of undertaking the operations of welding and/or coating within the workstation. This may be a weatherproof enclosure, for example.

The tower further includes doors 602 located on a side of the tower 206. As the pipe section 204 is moved into the firing line by the loading arm clamps 234₁₋₄ (not shown in Fig. 6), the pipe section passes through the doors 602, which are in an open configuration (see Fig. 6a). Once the pipe is in the firing line, the doors 602 are moved into a closed configuration (see Fig. 6b), whereby the doors form a substantial seal around the loading arm clamps.

The tower further includes seal 604. As the doors close, the seal 604 is engaged around the pipe section 204, such that the portion of the pipe section within the cover is substantially sealed from the environment outside the tower.

The tower further includes a cover 606 situated over a further side of the tower 206 and connectable to the tower so as to form a seal.

In this second embodiment, the seal is a rubber or neoprene type material. Alternatively the seal may be an air curtain type arrangement.

The doors are hydraulically actuated and are made from insulated steel. Alternatively the doors may be electrically actuated and/or may be constructed from a suitable composite or other lightweight material or resistant membrane, which provides protection from the weather for the workstation. Areas of the door which allow the pipe to enter (i.e. the areas between the loading arm clamps) may be constructed from rubber flaps.

In this embodiment, the doors are substantially 31m in height, i.e. slightly higher than the stroke length of the moveable travelling clamp, which in this example is substantially 30m. The doors are configured to open substantially 6m. It will be clear that the doors may be any size depending on the size of the tower, the size of the pipe section and the stroke length of the moveable clamping element.

Once in the closed configuration, the doors 602, the seal 604 and the cover 606 ensure that the interior of the tower is isolated from the exterior of the tower.

The system further includes a workstation 608, located toward the base of the tower 206 in close proximity to the lower end 210 of the pipe section 204. The workstation includes a platform 612 on which multiple operations can be undertaken. Examples of operations include welding of the pipe section 204 to the field joining, inspection and coating. The sealed environment within the tower created by the doors 602, the seal 604 and the cover 606 allows the operations to be undertaken in a clean environment.

The workstation 608 further includes a hatch 610. The hatch 610 is located in a floor portion (not shown) of the workstation 608 and is operable to open providing a route from above the surface 612 to below the surface. The hatch 610 may open by pivoting around a hinge or alternatively the hatch may be operable to slide over the surface 612 using rollers. Alternatively any other method of opening the hatch may be used.

Once the operations are complete and the pipe section 204 is joined to the field joint 250, the pipe section is lowered by the travelling clamp 222 in a plurality of passes or just one pass, depending on the pipe section being deployed (e.g. double, triple, hex etc) relative to the stroke length as previously described.

As illustrated in Fig. 6c, as the moveable clamping element 222 moves down the tower 206, the hatch 610 opens, allowing the travelling clamp an unimpeded course through its stroke length. That is the moveable clamping element is passed through the hatch, i.e. from above the workstation to below the workstation. The hatch remains open as the travelling clamp completes multiple passes of pipe section 204. As such, the workstation remains stationary while the moveable clamping element moves therethrough. Alternatively, the workstation may move traverse downward the J-lay tower to allow the moveable clamping element to traverse its full stroke length. The workstation may be traversed by 3-4m from the welding point, situated 1.5m above the deck of the vessel, to allow a 5m moveable clamping element to traverse its full stroke length.

Alternatively the hatch may open to allow the moveable clamping element to pass through the workstation 608 and subsequently close once the moveable clamping element has passed through the workstation.

Similarly, the hatch allows the moveable clamping element 222 to travel from below the workstation to above the workstation.

A method for building and deploying an elongate element in a J-lay operation, includes; holding a segment of the elongate element adjacent to an upright structure, clamping the segment with a moveable clamping element, lowering the segment using the moveable clamping element, passing the moveable clamping element through the workstation.

The workstation 608 may be moveable out of the stroke length of the moveable clamping element 222 to allow the passage of large items, for example subsea manifold assemblies. Various specific advantages of the optional features described above will now be described. These are in addition to the various advantages already described above in relation to various parts of the system or the system as a whole. It will be appreciated that numerous advantages can be achieved with the system and method described; some of those are achieved by the overall system, some are achieved by a combination of features and some are achieved by a specific feature.

Enclosing the workstation within the tower allows operations such as welding and coating at the field joint to be undertaken in a sheltered environment.

Aptly, the moveable clamping element is passable from above the workstation to below the workstation. This allows the workstation to remain stationary while the moveable clamping element traverses the tower. Thus time will be saved during the J-lay process and the power requirements for every cycle will be reduced.

Aptly, the moveable clamping element can release at a height accessible for joining operations.

Aptly, the moveable clamping element is passable through the workstation via an opening in a floor portion of the workstation. This prevents delays in the pipe lay whereby the workstation is moved from the firing line.

### Embodiment 3

A third embodiment of the invention includes a system for building and deploying an elongate element in a J-lay operation, including at least one moveable component. The at least one moveable component is movable via a multi-fall rope system, with the multi-fall rope system including a multi-rope system.

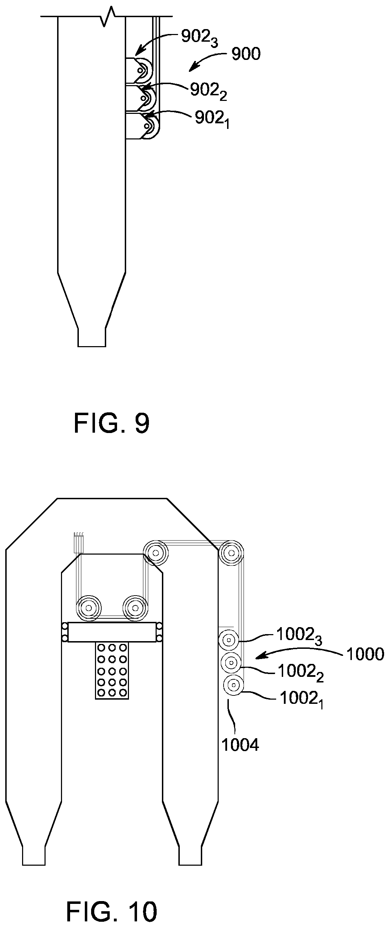

The multi-rope system may be used as an alternative to the double-drum hoist winch of the first embodiment to traverse the moveable clamping element 222. The multi-rope system may be two or more independently mounted drum winches cooperating, as shown by the three winches 902₁₋₃ of multi-rope system 900 in Fig. 9. Alternatively the multi-rope system may a single winch with a two or more drums, as shown by the three drums 1002₁₋₃ of multi-rope system 1000 in Fig. 10.

The winches are steel winches, which may be powered by either electric or hydraulic motors. The rope speed is typically 100m/min.

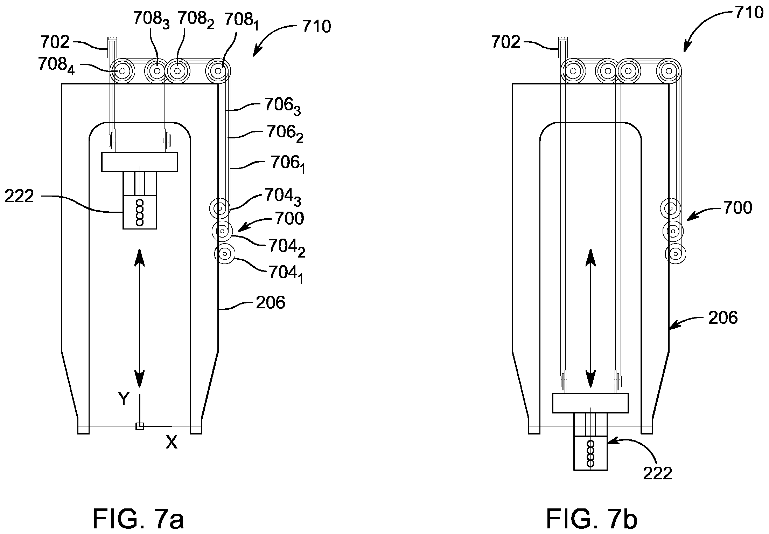

Figs. 7a-b illustrate the moveable clamping element 222 being traversed down the tower using a multi-rope system

In this case the multi-rope system 700 is mounted on the tower 206. Alternatively the multi-rope system may be routed onto the tower from the vessel.

In this example the multi-rope system has 3 drums, 704₁₋₃. The multi-rope system may have any number of drums, e.g. 4 or 5.

The ropes 706₁₋₃ from each respective drum 704₁₋₃ are reeved around the pulleys 708₁₋₄ of a hoist system 710 for traversing the travelling clamp and are terminated at a load balance system 702. Any suitable load balance system may be used, for example connecting the ends of the two ropes together, of a see-saw type arrangement. In this case the load balance system 702 is a hydraulic load balance system.

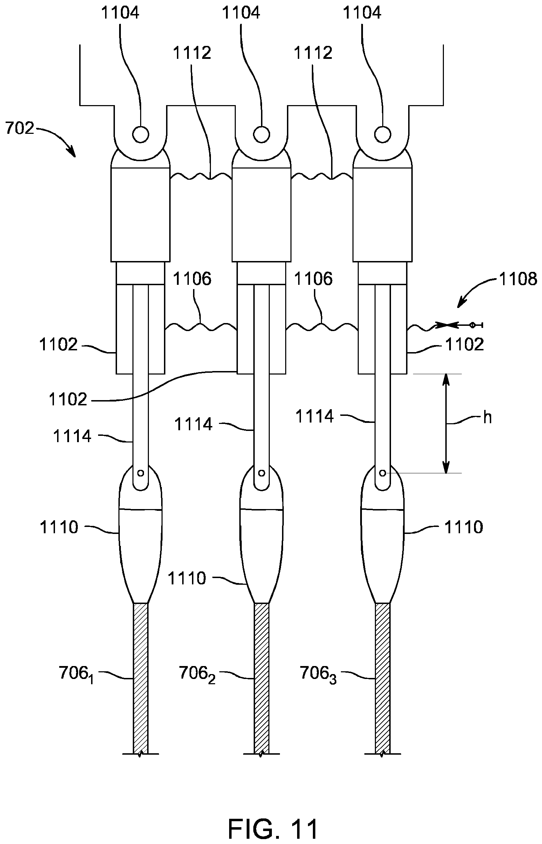

The hydraulic load balance system 702 is shown in more detail in Fig. 11. The hydraulic load balance system 702 uses hydraulic oil to passively adjust the rope lengths, maintaining an equal load in each of the ropes 706₁₋₃. The hydraulic load system includes load holding cylinders 1102 connected with the J-lay tower via corresponding pinned connections 1104. The load holding cylinders 1102 are further connected to hoist ropes 706₁₋₃ via struts 1114, pinned connections 1102 and rope terminals 1110.

The load holding cylinders 1102 are connected to one another via pipe work 1106. Pipe work 1106 allows the transfer of hydraulic fluid between load holding cylinders. Tension in each load holding cylinder is maintained by changing the extended length, h, of struts 1114 from the corresponding load holding cylinder.

The change in extended length h for each load holding cylinder is monitored using a transducer and fed back to the winches of the multi-rope system via a control system 1108.

The interconnecting pipe work 1106 may have a restriction added to control the rate of transfer of hydraulic fluid in the event of a rope break or a loss of load. The transfer of hydraulic fluid between load holding cylinders is controlled with control system 1108.

The load holding cylinders may be further connected to one another through further pipe work 1112. Further pipe work may be open to the air or to a reservoir (not shown).

The hydraulic load balance system 702 may be used actively for slow speed adjustment or applying high tension (potentially greater than the winch motor can apply).To apply a high load to the rope system without significant travel of the moveable clamping element, then in place of using larger motors and drive systems, the winch brakes could be applied and the load generated by energising the load holding cylinders. This allows load testing each weld by pulling up on the moveable clamping element by 110% whilst the deployed pipe remains clamped in the hang off clamp. This could be achieved without oversizing the winch motors.

The drums 704₁₋₃ of the multi-rope system cooperate, simultaneously lengthening or shortening the respective ropes 706₁₋₃ at the same rate so as to traverse the moveable travelling element up/down the tower 206.

The hydraulic load balance system is suitable for balancing the load between any number of ropes.

The multi-rope system has a higher speed of moveable clamping element 222 relative to the speed of the winch (i.e. the rope speed). For example, for a 3 drum multi-winch 12-fall system, the rope speed is 4 times larger than the speed of the travelling clamp. In comparison, for a double-drum winch system with the same power requirements, the rope speed is 5 times larger than the speed of the travelling clamp.

As such, the multi-rope system allows the speed of the moveable clamping element 222 to be increased, without the winch/rope speed being increased to unsafe levels. This is particularly useful for example on the empty return stroke as the moveable clamping element traverses up the tower 206.

The multi-rope system 700 reduces the snatch load increase on remaining ropes, which occurs in the event of a rope breaking, in comparison to double drum systems. For example the snatch load in the event of a rope break using 3 drums is substantially 66% of the snatch load for using a double drum system. The snatch load using 4 drums is substantially 55% of the snatch load using a double drum system.

This may allow smaller ropes to be used in comparison to known systems.

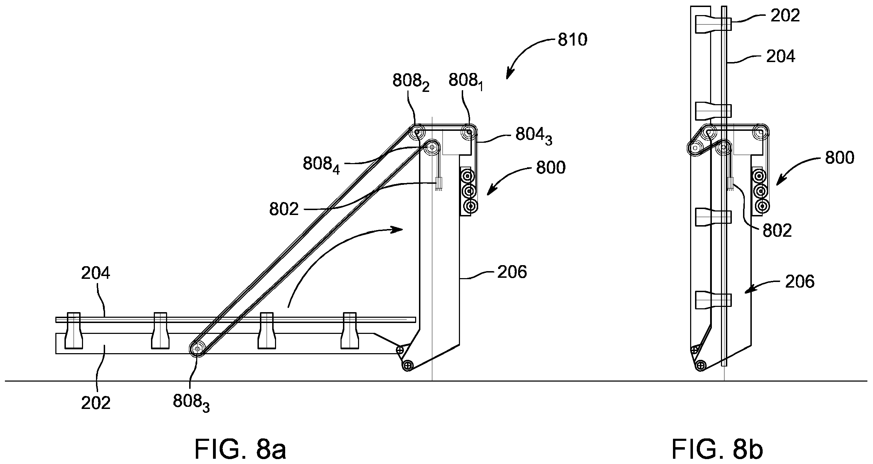

Similarly, the same multi-drum system described above may be used for drawing the loading arm 202 towards the upright structure 206 as shown in Fig. 8.

The ropes 806₁₋₃ from each respective drum 804₁₋₃ are reeved around the pulleys 808₁₋₄ of a hoist system 810 for traversing the travelling clamp and are terminated at a load balance system 802. Any suitable load balance system may be used.

The drums 804₁₋₃ of the multi-rope system cooperate, simultaneously lengthening or shortening the respective ropes 806₁₋₃ at the same rate so as to hoist the loading arm 222 and 204 from a substantially horizontal position to a position adjacent the tower 206. Various specific advantages of the optional features described above will now be described. These are in addition to the various advantages already described above in relation to various parts of the system or the system as a whole. It will be appreciated that numerous advantages can be achieved with the system and method described; some of those are achieved by the overall system, some are achieved by a combination of features and some are achieved by a specific feature.

The multi-rope system reduces the snatch load on remaining ropes in the event of rope breakage, compared to a double-drum system.

The multi-rope system allows for a higher travelling assembly speed relative to the winch speed, compared to a double-drum system.

The multi-rope system is more efficient compared to a double-drum system.

Aptly, the multi-rope system comprises more than two drums. This allows more practicable rope redundancy in comparison to a double-drum system.

Aptly, the ropes from each drum are terminated at a hydraulic load balance system. This allows equal load to be maintained in the ropes.

Aptly, a higher speed relative to the winch for the loading arm movement can be achieved, compared to a double system. The multi-drum winch reduces the snatch load on remaining ropes in the event of rope breakage, compared to a double-drum system of the loading arm.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A system for building and deploying an elongate element in a J-lay operation, comprising:
an upright structure (206);
a loading arm (202) for holding a segment of the elongate element adjacent to the upright structure (206);
a moveable clamping element (222) for clamping the segment and lowering the segment;
wherein the upright structure (206) is shorter in length than the loading arm (202) ;
wherein the moveable clamping element (222) is moveable along the upright structure through a stroke length, wherein the stroke length is between 25% and 100% of the length of the upright structure (206)

2. A system as claimed in any preceding claim, further comprising a further clamp (218) located beneath an end of the upright structure (206) for clamping a segment of the elongate element.

3. A system as claimed in claim 2, wherein the further clamp (218) is a static clamp.

4. A system as claimed in any preceding claim, wherein the loading arm (202) comprises an internal line up clamp.

5. A system as claimed in any preceding claim, wherein the moveable clamping element (222) is moveable via a multi-fall rope system.

6. A system as claimed in any preceding claim, wherein the stroke length is between 25% and 100% of the segment.

7. A vessel comprising a tower as the upright structure (206), and the system of any preceding claim.

8. A method of building and deploying an elongate element in a J-lay operation, comprising:
holding a segment of the elongate element in a loading arm (202) adjacent to an upright structure (206);
clamping the segment with a moveable clamping element (222);
lowering the segment using the moveable clamping element (222);
wherein the upright structure (206) is shorter in length than the loading arm (202),
moving the moveable clamping element (222) along the upright structure through a stroke length, wherein the stroke length is between 25% and 100% of the length of the upright structure (206).

9. A method as claimed in claim 8, wherein the elongate element is deployed through a plurality of passes; wherein a pass comprises:
the moveable clamping element (222) clamping a segment of the elongate element and lowering the segment;
a further clamp, located beneath an end of the upright structure (206), clamping the segment of the elongate element when the moveable clamping element (222) reaches a specified point;
the moveable clamp releasing the segment of the elongate element such that the elongate element is supported by the further clamp; and
the moveable clamp returning to its initial position.

10. A method as claimed in claim 9, wherein the further clamp is a static clamp.

11. A method as claimed in claim 9, wherein the further clamp clamps the segment of the elongate element when the moveable clamping element (222) reaches its lowermost point.

12. A method as claimed in claim 9, wherein the elongate element is deployed through two passes.

13. A method as claimed in any of claims 8 to 12 further comprising moving an elongate member from a first position towards a second position adjacent an upright structure (206) on the deck of a vessel.

14. A method as claimed in claim 13, further comprising the steps of placing the elongate member in a loading arm (202) before moving the elongate member from a first position towards a second position adjacent an upright structure (206) on the deck of a vessel.

## Patentansprüche

1. System zum Erstellen und Einsetzen eines länglichen Elements in einem J-Lay-Vorgang, umfassend:
eine aufrechte Struktur (206);
einen Ladearm (202) zum Halten eines Segments des länglichen Elements neben der aufrechten Struktur (206);
ein bewegliches Klemmelement (222) zum Klemmen des Segments und Absenken des Segments;
wobei die aufrechte Struktur (206) kürzer in Länge als der Ladearm (202) ist; wobei das bewegliche Klemmelement (222) entlang der aufrechten Struktur über eine Hublänge beweglich ist, wobei die Hublänge zwischen 25% und 100% der Länge der aufrechten Struktur (206) liegt.

2. System nach einem der vorhergehenden Ansprüche, ferner umfassend eine weitere Klemme (218), die unter einem Ende der aufrechten Struktur (206) angeordnet ist, um ein Segment des länglichen Elements zu klemmen.

3. System nach Anspruch 2, wobei die weitere Klemme (218) eine statische Klemme ist.

4. System nach einem der vorhergehenden Ansprüche, wobei der Ladearm (202) eine interne Ausrichtungsklemme umfasst.

5. System nach einem der vorhergehenden Ansprüche, wobei das bewegliche Klemmelement (222) über ein Mehrfachfall-Seilsystem beweglich ist.

6. System nach einem der vorhergehenden Ansprüche, wobei die Hublänge zwischen 25% und 100% des Segments liegt.

7. Schiff, umfassend einen Turm als aufrechte Struktur (206) und das System nach einem der vorhergehenden Ansprüche.

8. Verfahren zum Erstellen und Einsetzen eines länglichen Elements in einem J-Lay-Vorgang, umfassend:
Halten eines Segments des länglichen Elements in einem Ladearm (202) neben einer aufrechten Struktur (206);
Klemmen des Segments mit einem beweglichen Klemmelement (222); Absenken des Segments unter Verwendung des beweglichen Klemmelements (222);
wobei die aufrechte Struktur (206) kürzer in Länge als der Ladearm (202) ist; Bewegen des beweglichen Klemmelements (222) entlang der aufrechten Struktur über eine Hublänge, wobei die Hublänge zwischen 25% und 100% der Länge der aufrechten Struktur (206) liegt.

9. Verfahren nach Anspruch 8, wobei das längliche Element über mehrere Durchgänge eingesetzt wird; wobei ein Durchgang umfasst:
das bewegliche Klemmelement (222) klemmt ein Segment des länglichen Elements und senkt das Segment ab;
eine weitere Klemme, die sich unter einem Ende der aufrechten Struktur (206) befindet, klemmt das Segment des länglichen Elements, wenn das bewegliche Klemmelement (222) einen bestimmten Punkt erreicht;
die bewegliche Klemme gibt das Segment des länglichen Elements frei, so dass das längliche Element von der weiteren Klemme getragen wird; und die bewegliche Klemme kehrt in ihre Ausgangsposition zurück.

10. Verfahren nach Anspruch 9, wobei die weitere Klemme eine statische Klemme ist.

11. Verfahren nach Anspruch 9, wobei die weitere Klemme das Segment des länglichen Elements klemmt, wenn das bewegliche Klemmelement (222) seinen untersten Punkt erreicht.

12. Verfahren nach Anspruch 9, wobei das längliche Element über zwei Durchgänge eingesetzt wird.

13. Verfahren nach einem der Ansprüche 8 bis 12, ferner umfassend das Bewegen eines länglichen Elements von einer ersten Position in Richtung einer zweiten Position neben einer aufrechten Struktur (206) auf dem Deck eines Schiffes.

14. Verfahren nach Anspruch 13, ferner umfassend die Schritte des Platzierens des länglichen Elements in einem Ladearm (202) vor dem Bewegen des länglichen Elements von einer ersten Position in Richtung einer zweiten Position neben einer aufrechten Struktur (206) auf dem Deck eines Schiffes.

## Revendications

1. Système destiné à construire et déployer un élément allongé dans une opération de pose en J, comprenant :
une structure verticale (206) ;
un bras de chargement (202) destiné à maintenir un segment de l'élément allongé adjacent à la structure verticale (206) ;
un élément de serrage mobile (222) destiné à serrer le segment et à abaisser le segment ;
ladite structure verticale (206) étant plus courte en longueur que le bras de chargement (202) ; ledit élément de serrage mobile (222) étant mobile le long de la structure verticale sur une longueur de course, ladite longueur de course étant comprise entre 25 % et 100 % de la longueur de la structure verticale (206).

2. Système selon l'une quelconque des revendications précédentes, comprenant en outre une pince supplémentaire (218) située sous une extrémité de la structure verticale (206) destinée à serrer un segment de l'élément allongé.

3. Système selon la revendication 2, ladite pince supplémentaire (218) étant une pince statique.

4. Système selon l'une quelconque des revendications précédentes, ledit bras de chargement (202) comprenant une pince d'alignement interne.

5. Système selon l'une quelconque des revendications précédentes, ledit élément de serrage mobile (222) étant mobile par l'intermédiaire d'un système de câble à plusieurs chutes.

6. Système selon l'une quelconque des revendications précédentes, ladite longueur de course étant comprise entre 25 % et 100 % du segment.

7. Navire comprenant une tour en tant que structure verticale (206) et le système de l'une quelconque des revendications précédentes.

8. Procédé de construction et de déploiement d'un élément allongé dans une opération de pose en J, comprenant :
le maintien d'un segment de l'élément allongé dans un bras de chargement (202) adjacent à une structure verticale (206) ;
le serrage du segment avec un élément de serrage mobile (222) ; l'abaissement du segment à l'aide de l'élément de serrage mobile (222) ;
ladite structure verticale (206) étant plus courte en longueur que le bras de chargement (202), le déplacement de l'élément de serrage mobile (222) le long de la structure verticale sur une longueur de course, ladite longueur de course étant comprise entre 25 % et 100 % de la longueur de la structure verticale (206).

9. Procédé selon la revendication 8, ledit élément allongé étant déployé à travers une pluralité de passes ; une passe comprenant :
l'élément de serrage mobile (222) serrant un segment de l'élément allongé et abaissant le segment ;
une pince supplémentaire, située sous une extrémité de la structure verticale (206), serrant le segment de l'élément allongé lorsque l'élément de serrage mobile (222) atteint un point spécifié ;
la pince mobile libérant le segment de l'élément allongé de sorte que l'élément allongé soit supporté par la pince supplémentaire ; et la pince mobile revenant à sa position initiale.

10. Procédé selon la revendication 9, ladite pince supplémentaire étant une pince statique.

11. Procédé selon la revendication 9, ladite pince supplémentaire serrant le segment de l'élément allongé lorsque l'élément de serrage mobile (222) atteint son point le plus bas.

12. Procédé selon la revendication 9, ledit élément allongé étant déployé par deux passes.

13. Procédé selon l'une quelconque des revendications 8 à 12, comprenant le déplacement d'un élément allongé à partir d'une première position vers une seconde position adjacente à une structure verticale (206) sur le pont d'un navire.

14. Procédé selon la revendication 13, comprenant en outre les étapes de mise en place de l'élément allongé dans un bras de chargement (202) avant de déplacer l'élément allongé à partir d'une première position vers une seconde position adjacente à une structure verticale (206) sur le pont d'un navire.
